# EUROPÄISCHE PATENTSCHRIFT

(11) **EP 1 296 882 B1**
(45) Veröffentlichungstag und Bekanntmachung des Hinweises auf die Patenterteilung: **15.09.2004**
(21) Anmeldenummer: 01943524.7
(22) Anmeldetag: 19.06.2001
(51) Int. Cl.: B65G 1/137

(54) **KOMMISSIONIERVORRICHTUNG MIT IN EINEM REGAL ANGEORDNETEN ZWISCHENSPEICHERN IN FORM VON KIPPBAREN BEHÄLTERN**
PICKING DEVICE WITH INTERMEDIATE STORE ARRANGED ON A RACK IN THE FORM OF CONTAINERS WHICH TIP
DISPOSITIF DE PREPARATION DE COMMANDES EQUIPE DE MAGASINS INTERMEDIAIRES SOUS FORME DE CONTENEURS BASCULABLES AGENCES DANS UN RAYONNAGE

(30) Priorität: 20.06.2000 DE 10029323
(43) Veröffentlichungstag der Anmeldung: 02.04.2003
(73) Patentinhaber: Knapp Logistik Automation Gesellschaft MBH, 8075 Hart bei Graz (AT)
(72) Erfinder: FREUDELSPERGER, Karl, A-8075 Hart bei Graz (AT)
(74) Vertreter: Hanke, Hilmar
(86) Internationale Anmeldenummer: PCT/EP2001/006907
(87) Internationale Veröffentlichungsnummer: WO 2001/098183

(56) Entgegenhaltungen:
- WO-A-96/36547
- WO-A-97/03903
- US-A- 4 870 799

## Beschreibung

Die Erfindung betrifft eine Kommissioniervorrichtung mit in einem Regal im wesentlichen horizontal in Regallängsrichtung angeordneten Zwischenspeichern in Form von kippbaren Behältern mit Befüllungsöffnung, und mit einem den kippbaren Behältern zugeordneten, unteren Sammelförderer, Zentralförderer oder Puffer in Regallängsrichtung, wobei für einen Kommissionierauftrag ein oder mehrere Behälter vorzugsweise gleichzeitig von Hand oder maschinell mit ausgewählten Produkten in einer Füllstellung der Behälter befüllt werden, und durch Kippen der befüllten Behälter in eine Kippstellung die ausgewählten Produkte des Kommissionierauftrags auf den Sammelförderer, Zentralförderer oder Puffer abgegeben sowie auf dem Sammelförderer bzw. Zentralförderer oder nach dem Puffer einem Sammelbehälter zugeführt werden, der dann vorzugsweise alle gewünschten Produkte des Kommissionierauftrags enthält.

Kommissioniervorrichtungen der vorgenannten Art sind beispielsweise aus AT 403 570 oder AT 403 031 bekannt. Die kippbaren Behälter sind oben offen und als Schalen ausgebildet. Die Schalen weisen eine horizontale Schwenkachse auf und sind um 180° verschwenkbar. Bei einem Füllen der Schalen mit ausgewählten Produkten weist die Befüllungsöffnung der Schalen nach oben. Für ein Entleeren der Schalen werden die Schalen um 180° derart gekippt, daß die Befüllungsöffnung nach unten weist und dadurch die in den Schalen befindlichen Produkte aufgrund der Schwerkraft auf ein darunter befindliches Förderband fallen und dann weiter zu einer Sammelstelle transportiert und in einem Sammelbehälter abgefüllt werden, in dem sich dann sämtliche Produkte eines Kommissionierauftrages befinden. Sämtliche Schalen sind an einen gemeinsamen Kippantrieb mit einer umlaufenden Kette oder einem umlaufenden Zahnriemen angeschlossen und mittels Kupplung normalerweise getrennt. Sollen ausgewählte Schalen bzw. Behälter um 180° gekippt werden, werden deren Kupplungen mit dem gemeinsamen Kippantrieb über eine Zentralsteuereinheit der Kommissionieranlage für den Vorgang der Kippbewegung geschlossen und dadurch in die Kippstellung geschwenkt. Nach einem Entleeren der Produkte gelangen die Schalen bzw. Behälter wieder in ihre Ausgangslage der Füllstellung zurück.

Von Nachteil ist der große Schwenkbereich von 180°. Die kippbaren Behälter benötigen innerhalb der Gesamtanordnung der Kommissionieranlage für ein Verschwenken viel Raum. Der Kippvorgang dauert vergleichsweise lang. Die verschwenkten Massen sind vergleichsweise groß. Die im Behälter befindlichen Produkte werden bei der 180°-Verschwenkung "durcheinander gewürfelt" und unterliegen einem erhöhten Verschleiß. Der zentrale Kippantrieb arbeitet vergleichsweise träge. Zudem ist der Kippantrieb verschleiß- und störanfällig. Eine Betriebsunterbrechung bei Störung bedeutet gleichzeitig Ausfall der gesamten Kommissioniervorrichtung. Besonderer Nachteil ferner ist, daß eine bestehende Kommissionieranlage nur mit großem Aufwand umgebaut, insbesondere nur mit großem Aufwand in der Kapazität erweitert werden kann. Der Umbau ist dann sehr kostenintensiv und kann nur von geschultem Fachpersonal durchgeführt werden.

Aufgabe der Erfindung ist die Schaffung einer Kommissioniervorrichtung der eingangs genannten Art, welche einfach und kompakt aufgebaut und vielseitig in unterschiedlichen Varianten mit einfachen Zwischenspeichern von kippbaren Behältern ausrüstbar und insbesondere auch umrüstbar ist. Aufgabe der Erfindung ist ferner die Schaffung von kippbaren Behältern, die sehr einfach aufgebaut und variabel einsetzbar ausgebildet sind.

Diese Aufgabe wird durch den Gegenstand des unabhängigen Anspruchs gelöst. Vorteilhafte Ausgestaltungen ergeben sich aus den weiteren Ansprüchen.

Erfindungsgemäß besitzt jeder kippbare Behälter, abgesehen von der Befüllungsöffnung, eine offene Behälterseite, die in der Füllstellung des Behälters durch eine stationäre Regal-. wand geschlossen gehalten und in der von der stationären Regalwand entfernten Kippstellung offen ist und die Abgabeöffnung des Behälters bildet, aus der die Produkte des Behälters auf den Sammelförderer, Zentralförderer oder Puffer fallen.

Die stationäre Regalwand ist vorzugsweise eine vertikale oder eine zur Vertikalen geneigte Regalwand, die sich in Regallängsrichtung vorzugsweise an der Regalfrontseite erstreckt.

Bevorzugt schließt sich die offene Behälterseite nach unten an die Befüllungsöffnung des Behälters an.

Die offene Behälterseite und die Befüllungsöffnung erstrecken sich vorteilhaft über die gesamte Behälterbreite in Regallängsrichtung.

Der Behälter kann plane Wände besitzen, wobei zumindest ein planer Behälterboden, eine plane Behälterrückwand und zwei voneinander beabstandete Vertikalwände als plane Behälterseitenwände in Regalquerrichtung vorgesehen sind, wobei die offene Behälterseite der Behälterrückwand entgegengesetzt ist.

Die Behälterrückwand weist zweckmäßigerweise Perforationsöffnungen auf, um die Behälter auch von außen einsehen zu können.

Ein besonders einfacher Aufbau ergibt sich, wenn die beiden Vertikalwände gleich ausgebildet sind.

In besonderer Ausführungsform weisen die beiden Vertikalwände des Behälters fünf Ecken auf, wobei nicht nur die vorgenannten Wände, sondern zusätzlich oberhalb der Behälterrückwand und hinter der Befüllungsöffnung eine weitere plane Befestigungswand vorgesehen ist, an der oberseitig eine vorzugsweise vertikale Regalbefestigungskonsole befestigbar ist. Die Regalbefestigungskonsole besitzt an ihrem unteren Ende eine horizontale Schwenkachse, an welcher der Behälter hängend befestigt und in Regalquerrichtung nach hinten und nach oben verschwenkbar ist.

Die offene Behälterseite und die Befüllungsöffnung können einen Winkel von 180° bis ca. 150° einschließen.

Der Winkel zwischen der offenen Behälterseite und dem Behälterboden beträgt vorzugsweise ca. 90°.

Jeder Behälter weist bevorzugt einen eigenen Kippantrieb auf. Dabei ist der Kippantrieb zusammen mit einer Kippsteuereinrichtung des Behälters insbesondere an der Regalbefestigungskonsole befestigt.

Der Kippantrieb ist eine vorzugsweise pneumatisch betätigte Kolben-Zylinder-Einrichtung, welche an der Befestigungswand exzentrisch zur Schwenkachse angelenkt ist.

Der Kolben der Kolben-Zylinder-Einrichtung kann einseitig oder zweiseitig beaufschlagt sein.

Die Kippsteuereinrichtung umfaßt im besonderen ein elektromagnetisch betätigbares Steuerventil.

Der Behälter einschließlich Regalbefestigungskonsole, Kippantrieb und Kippsteuereinrichtung sind vorzugsweise eine Baueinheit bzw. ein Einbaumodul des Regals der Kommissioniervorrichtung.

Die Regalbefestigungskonsole, der Kippantrieb sowie die Kippsteuereinrichtung besitzen bevorzugt eine Breite, die kleiner oder gleich der Behälterbreite ist.

Eine einstückig ausgebildete stationäre Regalwand ist besonders für mehrere dicht nebeneinander angeordnete Baueinheiten bzw. Einbaumodule vorgesehen.

Mehrere Behälter können in einer oder mehreren übereinander gelegenen Regalebenen nebeneinander und/oder hintereinander angeordnet sein.

Die stationäre Regalwand ist bevorzugt ein Einbauteil eines Regals, das aus einem Rahmensystem nach dem Baukastenprinzip variabel aufbaubar ist.

Vorzugsweise ein vorgenannter kippbarer Behälter kann bevorzugt zusammen mit weiteren gleichgearteten Behältern in einem Regal einer Kommissioniervorrichtung und/oder in einem Nichtkommissionier-Regal verwendet sein und vorzugsweise als Baueinheit bzw. Einbaumodul einbaubar sein. Mehrere Regale können hierbei in Reihe oder parallel, insbesondere auch als Doppelregal, vorgesehen sein.

Erfindungsgemäß ist also als kippbarer Behälter - für sich allein betrachtet - kein "Behälter" im herkömmlichen Sinne vorgesehen, in dem Produkte zwischengespeichert werden können, sondern nur ein Behälterteil, der erst zusammen mit einer festen Regalwand als Zwischenspeicher fungiert. Der Behälterteil befindet sich in der Füllstellung des Behälters in einem Anschlag an der festen Regalwand, wobei erst dann die eingefüllten Produkte im Behälter gehalten werden. Die feste Regalwand ist senkrecht oder befindet sich in einem Winkel zur Vertikalen, geneigt nach unten in Regalquerrichtung nach innen. Dadurch wird - bezogen auf ein großes Fassungsvermögen des Behälters - nur ein kleiner Behälter(-masse-)teil benötigt, der für ein Öffnen des Behälters von der festen Regalwand weg in Regalquerrichtung nach hinten und nach oben in die Kippstellung bewegt werden muß. Durch die geringen beschleunigten Massen ist ein sehr schnelles Takten bzw. Kippen des Behälters möglich. Der Behälterboden - entsprechende Öffnungsgeschwindigkeit vorausgesetzt - wird quasi unter den eingefüllten Produkten des Behälters "weggezogen". Die Produkte fallen, wie eingelagert, im freien Fall ohne seitliche Rutsch- oder Umwälzbewegung nach unten auf den nur gering beabstandeten Sammelförderer oder Puffer, und können nicht hängen bleiben, wie dies beim Stand der Technik der Fall ist. Entsprechend schnell kann auch der geöffnete Behälter aus der Kippstellung wieder in die normale Ausgangsstellung, nämlich in die Füllstellung, zurückbewegt werden, und die Behälter stehen dann für ein weiteres Befüllen zur Verfügung. Die Kippbewegung beschreibt eine Winkel von nicht mehr als ca. 30° bis allenfalls 45°. Durch die geringe bewegte Behältermasse und den kleinen Kippwinkel kann der Kippantrieb trotz großer Aufnahmekapazität des Behälters in der Leistung klein ausgelegt werden. Der geringe Kippwinkel benötigt in einem Regal wenig Einbauraum eines Behälters in Regalquerrichtung. Die Produkte werden in einem Regal in einer Regalebene in einer vergleichsweise weit nach unten reichenden Tasche zwischengespeichert. Die Behälter haben nur ein schmale.Breite, bezogen auf die Behältertiefe nach unten. Innerhalb der schmalen Behälterbreite befinden sich auch die Behälterbefestigung mit sämtlichen Anbau- und Einbauteilen der Regalbefestigungskonsole, des Kippantriebs und der Kippsteuereinrichtung. Ein vorgenannter Behälter ist vorzugsweise ein einziges Modulbauteil, das zusammen mit anderen Modulen dicht nebeneinander platzsparend in einem Regal untergebracht werden kann. Auch einzelne dicht neben einander liegenden Modulteile können zusammen ein Paket in Modulform bilden, das dann einfach und schnell in einem Regal eingebaut werden kann. Die einzelnen Regalbefestigungskonsolen sind dann auf einem Querblech vormontiert, zusammmen mit den elektrischen Anschlußleitungen beispielsweise für die elektromagnetisch betägbaren diversen Steuerventile und den pneumatischen Anschlußleitungen für die diversen Kippantriebe in Form von pneumatischen Kolben-Zylinder-Einrichtungen.

Der Behälter mit seinen Einzelkomponenten oder eine Behältergruppe bildet also eine modulare Einheit, die vorzugsweise an beliebige Systeme angebaut werden kann.

Für den Zustand "Behälter geschlossen" bzw. für den Zustand der Füllstellung sind keine mechanischen Hilfsmittel wie Klinke oder dergleichen notwendig. Das Wirken der Schwerkraft reicht primär für den geschlossenen Zustand aus. Im Betrieb wird dieser Zustand durch den Druck des geöffneten ausgefahren Pneumatikzylinders unterstützt.

Die Bewegungsgeschwindigkeit der kippbaren Behälter ist einstellbar.

Die Erfindung wird nachfolgend anhand eines Ausführungsbeispiels unter Bezugnahme auf die beigefügte Zeichnung näher erläutert; es zeigen:

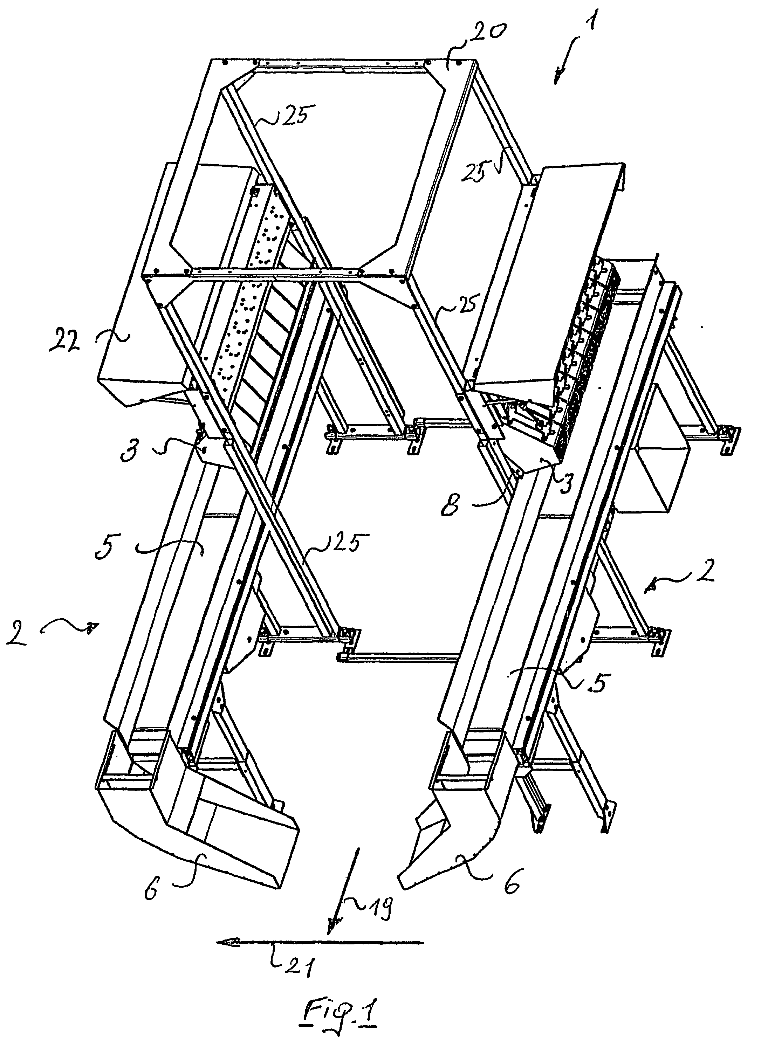

- Figur 1: eine Kommissioniervorrichtung mit zwei Regalen in Form eines Doppelregals mit zugeordneten Sammelförderern und darüber liegenden kippbaren Behältern als Zwischenspeicher in einer perspektivischen Ansicht,

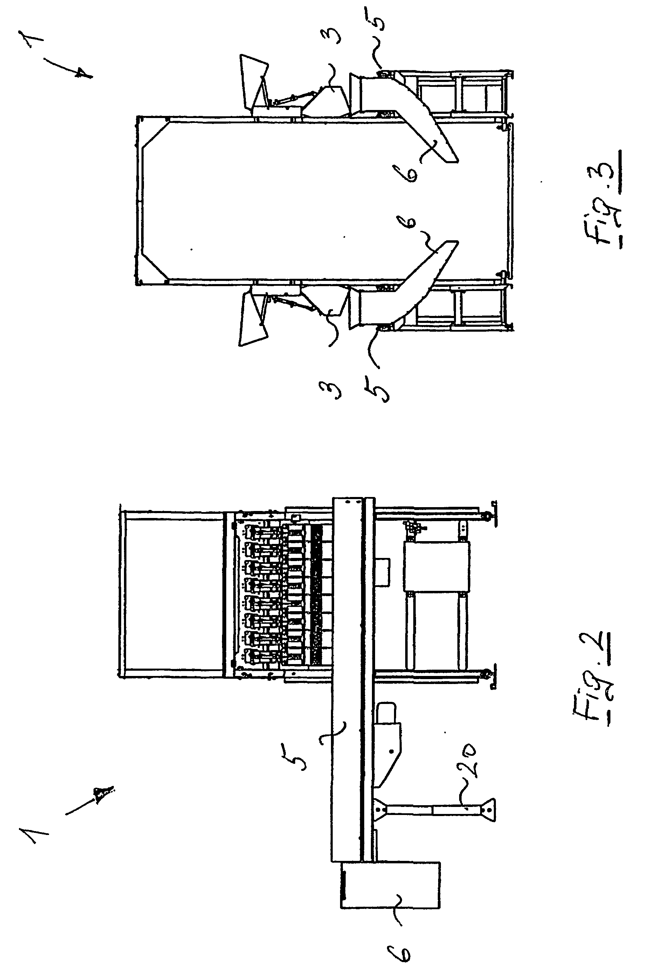

- Figur 2: die Kommissioniervorrichtung nach Figur 1 in einer schematischen Seitenansicht,
- Figur 3: die Kommissioniervorrichtung nach Figur 1 in einer schematischen Stirnansicht,
- Figur 4: die kippbaren Behälter nach Figur 1 in einer schematischen perspektivischen Ansicht,
- Figur 5: die kippbaren Behälter nach Figur 4 in einer schematischen Seitenansicht,
- Figuren 6, 7 und 8: in einer herabgelassenen Füllstellung einen einzelnen kippbaren Behälter nach den Figuren 1 bis 5 in einer Ansicht von hinten, von der Seite und in einer perspektivischen Ansicht, und
- Figur 9: den in den Figuren 6 bis 8 veranschaulichten kippbaren Behälter sowohl in seiner herabgelassenen Füllstellung als auch in seiner verschwenkten hochgehobenen Kippstellung, mit Darstellung einer festen Regalwand, welche Bestandteil eines jeden Regals ist.

Gemäß Zeichnung umfaßt eine Kommissioniervorrichtung 1 zwei als Doppelregal ausgebildete Regale 2 mit jeweils horizontal in Regallängsrichtung angeordneten Zwischenspeichern in Form von kippbaren Behältern 3.

Unter den kippbaren Behältern 3 befinden sich jeweils ein Sammelförderer 5 mit längsendseitigen Rutschen 6 in Richtung Doppelregal-Mitte.

In der Doppelregal-Mitte befindet sich in Regallängsrichtung ein symbolisch mittels Pfeil 19 veranschaulichter Zentralförderer, dem sich längsendseitig ein symbolisch mittels Pfeil 21 veranschaulichter Querförderer anschließt, auf dem nicht dargestellte Sammelbehälter vorbeigetaktet werden.

Jeder Sammelbehälter steht für einen kompletten Kommissionierauftrag.

Für einen einzelnen Kommissionierauftrag werden ein oder mehrere Behälter 3 vorzugsweise gleichzeitig von Hand oder maschinell mit ausgewählten Produkten in einer Füllstellung F der Behälter befüllt.

Durch Kippen der befüllten Behälter in eine Kippstellung K gemäß Figur 9 werden die ausgewählten Produkte des Kommissionierauftrags auf den oder die Sammelförderer 5 abgegeben, und gelangen von dort über Rutschen 6 zum Zentralförderer 19, sowie von dort zum zugeordneten Sammelbehälter, der auf dem Querförderer 21 zum Längsende des Zentralförderers 19 hingetaktet wird.

Sämtliche Steuervorgänge, insbesondere auch die Kippvorgänge der kippbaren Behälter 3, übernimmt eine nicht veranschaulichte zentrale elektronische Steuereinheit.

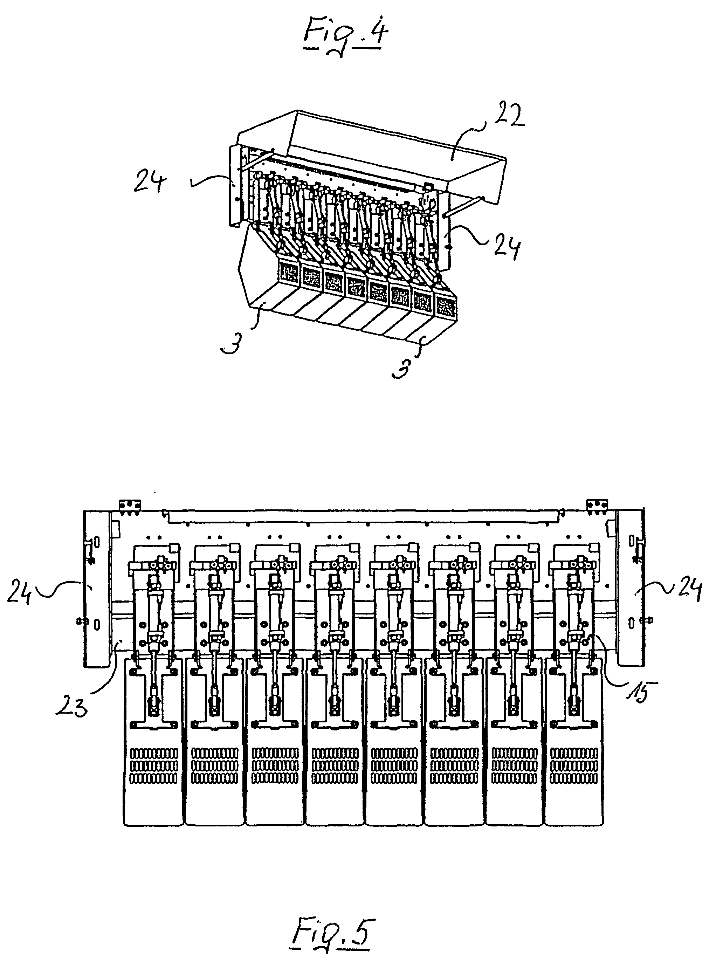

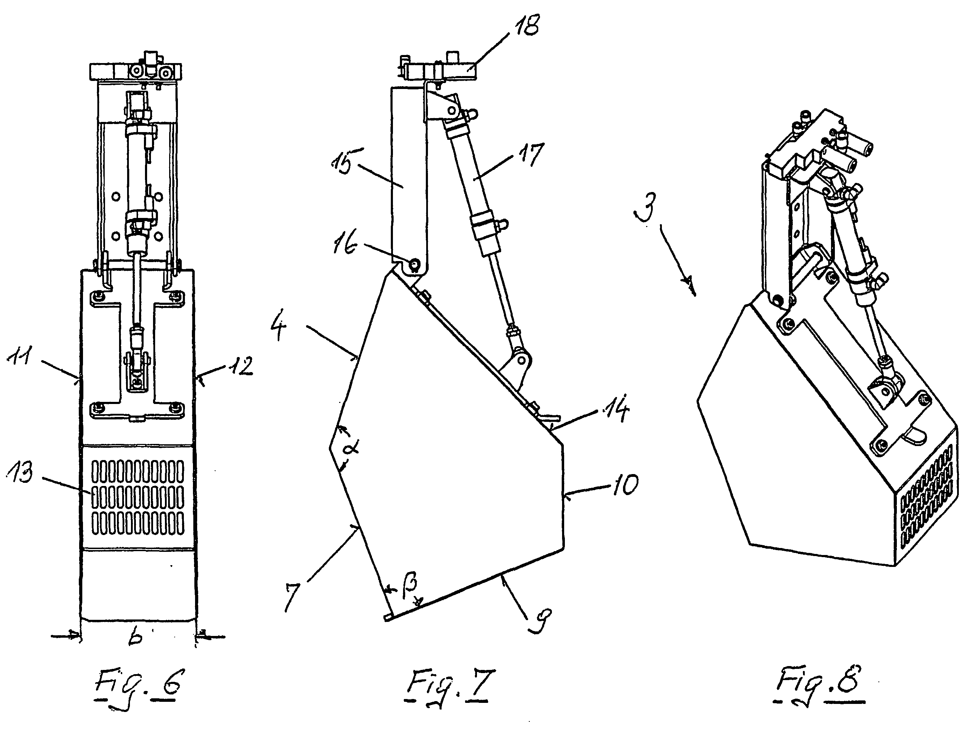

Die kippbaren Behälter 3 sind bei jedem einzelnen Regal 2 als modulares Paket gemäß den Figuren 4 und 5 aufgebaut.

Im Ausführungsbeispiel der Zeichnung sind acht einzelne kippbare Behälter 3 dicht aneinander liegend an einer vertikalen Längswand 23 montiert. Die Längswand 23 besitzt ferner endseitige vertikale Befestigungsstege 24, wobei ferner eine obere horizontale Abdeckung 22 als Schutz der verschwenkbaren Einzelteile der Behälter 3 vorgesehen ist.

Vorgenanntes modulares Paket der kippbaren Behälter 3 ist an vertikalen Pfosten 25 des Regals 2 über dem dortigen Abschnitt des darunterliegenden Sammelförderers 5 in Regallängsrichtung montiert, und zwar an der Regalfrontseite, die jeweils zur Mitte des Doppelregals weist.

Die Befestigung des modularen Pakets am Regal 2 ist dergestalt, daß eine feste im wesentlichen senkrechte oder gegen die Vertikale geneigte Regalwand 8, welche sich an der Regalfrontseite in Regallängsrichtung zwischen den Pfosten 25 befindet, sich in einem besonderen Anschlag mit den Behältern 3 gemäß Figur 9 befindet, wenn die Behälter 3 sich in ihrer Füllstellung F befinden. Insbesondere wird dabei eine offene Behälterseite 7 des Behälters komplett abgedeckt, und der Behälter 3 erst zu einem befüllbaren Behältnis ausgebildet.

Die feste bzw. stationäre Regalwand 8 ist ein Einbauteil des Regals 2, das prinzipiell aus einem Rahmensystem 20 nach dem Baukastenprinzip variabel aufbaubar ist.

Jeder kippbare Behälter 3 ist zwischen einer herabgelassenen Füllstellung F und einer Kippstellung K in Regalquerrichtung nach hinten und nach oben schwenkbar, wie dies insbesondere in Figur 9 veranschaulicht ist.

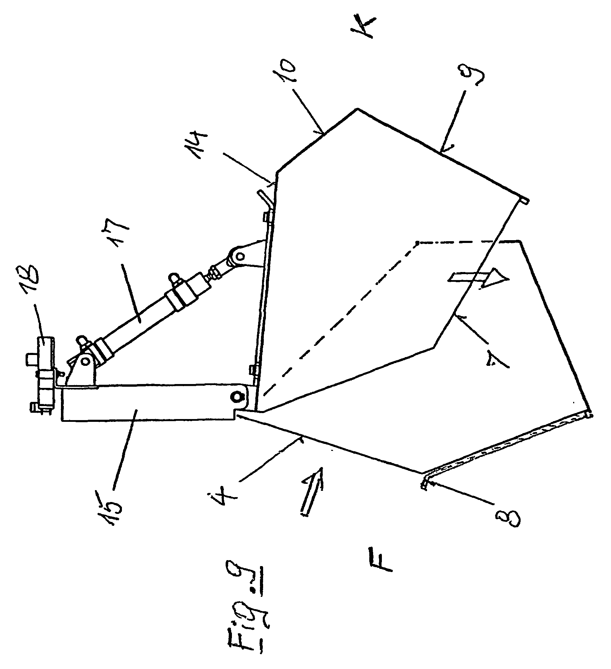

Jeder kippbare Behälter 3 besitzt, wie dies im besonderen den Figuren 6 bis 9 zu entnehmen ist, unter anderem eine Befüllungsöffnung 4 sowie darunterliegend die bereits angesprochene offene Behälterseite 7 in Regalquerrichtung an der Regalfrontseite.

Der kippbare Behälter 3 wird also in seiner Füllstellung F durch eine stationäre Regalwand 8 geschlossen gehalten und mit Produkten von der Regalfrontseite her befüllt.

Befindet sich der kippbare Behälter 3 in seiner Kippstellung K, ist die offene Behälterseite 7 von der stationären Regalwand 8 entfernt. Dann dient die offene Behälterseite 7 als Abgabeöffnung des Behälters 3, aus der die Produkte des Behälters 3 auf den Sammelförderer 5 nach unten fallen, wie dies insbesondere durch Pfeil/rechts in Figur 9 veranschaulicht ist.

Die offene Behälterseite 7 und die Befüllungsöffnung 4 erstrecken sich über die gesamte Behälterbreite b in Regallängsrichtung.

Jeder einzelne kippbare Behälter 3 hat plane Wände, wobei ein planer Behälterboden 9, eine plane Behälterrückwand 10 und zwei voneinander beabstandete Vertikalwände 11, 12 als plane Behälterseitenwände in Regalquerrichtung vorgesehen sind. Die offene Behälterseite 7 ist der Behälterrückwand 10 entgegengesetzt. Die Behälterrückwand 10 weist Perforationsöffnungen 13 auf. Beide Vertikalwände 11, 12 sind gleich und in Draufsicht fünfeckig ausgebildet.

Oberhalb der Behälterrückwand 10 und hinter der Befüllungsöffnung 4 befindet sich eine plane Befestigungswand 14, an der oberseitig eine vertikale Regalbefestigungskonsole 15 vorgesehen ist.

Die Regalbefestigungskonsole 15 hat an ihrem unteren Ende eine horizontale Schwenkachse 16, an welcher der Behälter 3 hängend befestigt und in Regalquerrichtung nach hinten und nach oben schwenkbar ist.

Die offene Behälterseite 7 und die Befüllungsöffnung 4 schließen im Ausführungsbeispiel einen Winkel α von ca. 150° ein. Die offene Behälterseite 7 und der Behälterboden 9 bilden einen Winkel β von 90°.

Die Regalbefestigungskonsole 15 weist einen Kippantrieb 17 und eine Kippsteuereinrichtung 18 für den Behälter 3 auf.

Der Kippantrieb 17 ist im besonderen eine pneumatische Kolben-Zylinder-Einrichtung, welche an der oberern, hinteren Befestigungswand 14 des Behälters 3 exzentrisch zur Schwenkachse 16 angelenkt ist.

Die Kippsteuereinrichtung 18 umfaßt ein elektromagnisch betätigbares Steuerventil, welches in einer pneumatischen Leitungsverbindung zur Kolben-Zylinder-Einrichtung steht. Die pneumatische Leitungsverbindung wird über eine nicht veranschaulichte Sammelleitung gespeist.

Jeder kippbare Behälter 3 einschließlich Regalbefestigungskonsole 15, Kippantrieb 17 und Kippsteuereinrichtung 18 stellt für sich eine Baueinheit bzw. ein Einbaumodul dar, der allein oder im dargestellten Ausführungsbeispiel in Verbindung mit anderen kippbaren Behältern als Paket in ein Regal 2 eingebaut ist. Die Regalbefestigungskonsolen 15 sämtlicher kippbaren Behälters 3 des Pakets sind an der bereits genannten Längswand 23 befestigt. Die einstückig ausgebildete stationäre Regalwand 8 ist also für mehrere dicht nebeneinander angeordnete Baueinheiten bzw. Einbaumodule vorgesehen.

Die Regalbefestigungskonsole 15, der Kippantrieb 17 und die Kippsteuereinrichtung 18 besitzen eine Breite, die kleiner als die Behälterbreite b ist.

Das vorgenannte Puffer-Speichergesamtsystem besteht also aus einem Rahmensystem zur Aufnahme der Komponenten, einem Behältersystem als Puffer-Speichersystem für die Produkte, einem Sammelbandsystem zum auftragsbezogenen Abtransport der Produkte, einem Rutschsystem zum Transport der Produkte vom Sammelbandsystem auf das Zentralbandsystem und/oder in eine weitere Puffervorrichtung.

Das Behältersystem kann als ein n-Behälter-System ausgeführt werden. Die Einzelbehälter können mehrfach vertikal und horizontal unterteilt ausgeführt sein.

Das Entleeren der Behälter erfolgt auftragsbezogen durch eine Wippbewegung auf das Sammelbandsystem bzw. je nach Verwendung auch direkt auf ein Zentralbandsystem und/oder in eine Puffervorrichtung.

Der Behälter stellt in Verbindung mit den angeführten Komponenten (Befestigungen, Lager, Zylinder, Ventil) ein Modul dar.

Das Behälterspeichersystem kann vorzugsweise durch seine Modularität an unterschiedlichen statischen Regalen bzw. Kommissionierautomaten als Pufferspeicher angeordnet werden.

Die Anordnung des Behälters kann seriell und/oder parallel erfolgen.

Die Steuerung des Puffer-Speichersystems erfolgt über ein Softwaresystem bzw. über eine dem Einsatzbereich des Puffer-Speichersystems zugehörige Automatensteuerungssoftware.

In einer Funktion des Puffer-Speichersystems werden dem Behältersystem Produkte automatisch bzw. manuell in die Behälteröffnung übergeben. Es können vorzugsweise Produkte ohne Formeinschränkungen entsprechend den üblichen Produktstandards eines Klein- und Großhandels innerhalb der möglichen maximalen Abmessungen gespeichert bzw. gepuffert werden. Durch eine Wippbewegung wird der Behälter nach hinten bewegt, wodurch der Behälterboden (Behälterunterseite) eine Kreisbahn beschreibt, so daß für die Produkte eine relativ kurze Fallzeit gewährleistet werden kann. Das Entleeren der Behälter erfolgt auftragsbezogen.

## Patentansprüche

1. Kommissioniervorrichtung (1) mit in einem Regal (2) im wesentlichen horizontal in Regallängsrichtung angeordneten Zwischenspeichern in Form von kippbaren Behältern (3) mit Befüllungsöffnung (4), und mit einem den kippbaren Behältern (3) zugeordneten, unteren Sammelförderer (5), Zentralförderer oder Puffer in Regallängsrichtung, wobei für einen Kommissionierauftrag ein oder mehrere Behälter (3) vorzugsweise gleichzeitig von Hand oder maschinell mit ausgewählten Produkten in einer Füllstellung (F) der Behälter befüllt werden, und durch Kippen der befüllten Behälter in eine Kippstellung (K) die ausgewählten Produkte des Kommissionierauftrags auf den Sammelförderer (5), Zentralförderer oder Puffer abgegeben sowie auf dem Sammelförderer bzw. Sammelförderer oder nach dem Puffer einem Sammelbehälter zugeführt werden, der dann vorzugsweise alle gewünschten Produkte des Kommissionierauftrags enthält,
**dadurch gekennzeichnet,**
**daß** jeder kippbare Behälter (3), abgesehen von der Befüllungsöffnung (4), eine offene Behälterseite (7) besitzt, die in der Füllstellung (F) des Behälters durch eine stationäre Regalwand (8) geschlossen gehalten und in der von der stationären Regalwand (8) entfernten Kippstellung (K) offen ist und die Abgabeöffnung des Behälters (3) bildet, aus der die Produkte des Behälters auf den Sammelförderer (5), Zentralförderer oder Puffer fallen.

2. Kommissioniervorrichtung nach Anspruch 1,
**dadurch gekennzeichnet,**
**daß** die stationäre Regalwand (8) eine vertikale oder eine zur Vertikalen geneigte Regalwand ist, die sich in Regallängsrichtung vorzugsweise an der Regalfrontseite erstreckt.

3. Kommissioniervorrichtung nach Anspruch 2,
**dadurch gekennzeichnet,**
**daß** die offene Behälterseite (7) nach unten sich an die Befüllungsöffnung (4) des Behälters (3) anschließt.

4. Kommissioniervorrichtung nach Anspruch 2 oder 3,
**dadurch gekennzeichnet,**
**daß** die offene Behälterseite (7) und die Befüllungsöffnung (4) sich über die gesamte Behälterbreite (b) in Regallängsrichtung erstrecken.

5. Kommissioniervorrichtung nach einem der Ansprüche 1 bis 4,
**dadurch gekennzeichnet,**
**daß** der Behälter (3) plane Wände besitzt, wobei zumindestein planer Behälterboden (9), eine plane Behälterrückwand (10) und zwei voneinander beabstandete Vertikalwände (11, 12) als plane Behälterseitenwände in Regalquerrichtung vorgesehen sind, und die offene Behälterseite (7) der Behälterrückwand (10) entgegengesetzt ist.

6. Kommissioniervorrichtung nach Anspruch 5,
**dadurch gekennzeichnet,**
**daß** die Behälterrückwand (10) Perforationsöffnungen (13) aufweist.

7. Kommissioniervorrichtung nach Ansprüche 5 oder 6,
**dadurch gekennzeichnet,**
**daß** die beiden Vertikalwände (11, 12) gleich ausgebildet sind.

8. Kommissioniervorrichtung nach einem der Ansprüche 5 bis 7,
**dadurch gekennzeichnet,**
**daß** die beiden Vertikalwände (11, 12) fünfeckig ausgebildet sind, sowie oberhalb der Behälterrückwand (10) und hinter der Befüllungsöffnung (4) eine weitere plane Befestigungswand (14) vorgesehen ist, an der oberseitig eine vorzugsweise vertikale Regalbefestigungskonsole (15) vorgesehen ist, die an ihrem unteren Ende eine horizontale Schwenkachse (16) besitzt, an welcher der Behälter (3) hängend befestigt und in Regalquerrichtung nach hinten und nach oben schwenkbar ist.

9. Kommissioniervorrichtung nach einem der Ansprüche 1 bis 8,
**dadurch gekennzeichnet,**
**daß** die offene Behälterseite (7) und die Befüllungsöffnung (4) einen Winkel (α) von 180° bis ca. 150° einschließen.

10. Kommissioniervorrichtung nach einem der Ansprüche 1 bis 9,
**dadurch gekennzeichnet,**
**daß** die offene Behälterseite (7) und der Behälterboden (9) einen Winkel (β) von ca. 90° einschließt.

11. Kommissioniervorrichtung nach einem der Ansprüche 8 bis 10,
**dadurch gekennzeichnet,**
**daß** die Regalbefestigungskonsole (15) einen Kippantrieb (17) und eine Kippsteuereinrichtung (18) für den Behälter (3) aufweist.

12. Kommissioniervorrichtung nach Anspruch 11,
**dadurch gekennzeichnet,**
**daß** der Kippantrieb (17) eine vorzugsweise pneumatisch betätigte Kolben-Zylinder-Einrichtung ist, welche an der Befestigungswand (14) exzentrisch zur Schwenkachse (16) angelenkt ist.

13. Kommissioniervorrichtung nach Anspruch 11 oder 12,
**dadurch gekennzeichnet,**
**daß** die Kippsteuereinrichtung (18) ein elektromagnetisch betätigbares Steuerventil umfaßt.

14. Kommissioniervorrichtung nach einem der Ansprüche 11 bis 13,
**dadurch gekennzeichnet,**
**daß** der Behälter (3) einschließlich Regalbefestigungskonsole (15), Kippantrieb (17) und Kippsteuereinrichtung (18) eine Baueinheit bzw. ein Einbaumodul für das Regal (2) ist.

15. Kommissioniervorrichtung nach einem der Ansprüche 11 bis 14,
**dadurch gekennzeichnet,**
**daß** die Regalbefestigungskonsole (15), der Kippantrieb (17) und die Kippsteuereinrichtung (18) eine Breite besitzen, die kleiner oder gleich der Behälterbreite (b) ist.

16. Kommissioniervorrichtung nach Ansprüche 14 oder 15,
**dadurch gekennzeichnet,**
**daß** eine einstückig ausgebildete stationäre Regalwand (8) für mehrere dicht nebeneinander angeordnete Baueinheiten bzw. Einbaumodule vorgesehen ist.

17. Kommissioniervorrichtung nach einem der Ansprüche 1.bis 16,
**dadurch gekennzeichnet,**
**daß** mehrere Behälter (3) in einer oder mehreren übereinander gelegenen Regalebenen nebeneinander und/oder hintereinander angeordnet sind.

18. Kommissioniervorrichtung nach einem der Ansprüche 1 bis 17,
**dadurch gekennzeichnet,**
**daß** die stationäre Regalwand (8) ein Einbauteil eines Regals ist, das aus einem Rahmensystem (20) nach dem Baukastenprinzip variabel aufbaubar ist.

## Claims

1. Commissioning device (1) with intermediate storage areas, arranged on a shelf (2), essentially horizontally in the longitudinal direction of the shelf in the form of tiltable containers (3) with a filling opening (4), and with a lower collecting conveyor (5), central conveyor or buffer associated with said tiltable containers (3) in the longitudinal direction of the shelf, wherein one or more said containers (3) are preferably simultaneously filled manually or mechanically with selected products in a filling position (F) of the containers for a commissioning order, and the selected products are released onto said collecting conveyor (5), central conveyor or buffer by tilting the filled containers into a tilted position (K) and are fed on the collecting conveyor or central conveyor or after the buffer to a collecting container, which will then preferably contain all the desired products of the commissioning order,
**characterized in that**
each tiltable container (3) has, aside from said filling opening (4), an open container side (7), which is kept closed in said filling position (F) of the container by a stationary shelf wall (8) and is open in said tilted position (K) that is away from said stationary shelf wall (8) and forms the release opening of said container (3), from which the products of the container fall onto said collecting conveyor (5), central conveyor or buffer.

2. Commissioning device in accordance with claim 1,
**characterized in that**
said stationary shelf wall (8) is a shelf wall that is vertical or sloped in relation to the vertical and preferably extends on the front side of the shelf in the longitudinal direction of the shelf.

3. Commissioning device in accordance with claim 2,
**characterized in that**
said open container side (7) joins said filling opening (4) of the said container (3) in the downward direction.

4. Commissioning device in accordance with claim 2 or 3,
**characterized in that**
said open container side (7) and said filling opening (4) extend over the entire container width (b) in the longitudinal direction of the shelf.

5. Commissioning device in accordance with one of the claims 1 through 4,
**characterized in that**
said container (3) has flat walls, wherein at least one flat container bottom (9), a flat container rear wall (10) and two vertical walls (11, 12) located at spaced locations from one another are provided as flat container side walls in the transverse direction of the shelf, and said open container side (7) is located opposite said container rear wall (10).

6. Commissioning device in accordance with claim 5,
**characterized in that**
said container rear wall (10) has perforation openings (13).

7. Commissioning device in accordance with claim 5 or 6,
**characterized in that**
said two vertical walls (11, 12) have an identical design.

8. Commissioning device in accordance with one of the claims 5 through 7,
**characterized in that**
said two vertical walls (11, 12) have a pentagonal design, and an additional flat fastening wall (14) is provided above said container rear wall (10) and behind said filling opening (4), and a preferably vertical shelf fastening bracket (15) is provided on the top side at said additional flat fastening wall (14), and said vertical shelf fastening bracket (15) has at its lower end a horizontal pivot axis (16), at which said container (3) is fastened in a suspended manner and is pivotable backward and forward in the transverse direction of the shelf.

9. Commissioning device in accordance with one of the claims 1 through 8,
**characterized in that**
said open container side (7) and said filling opening (4) form an angle (α) of 180° to about 150°.

10. Commissioning device in accordance with one of the claims 1 through 9,
**characterized in that**
said open container side (7) and said container bottom (9) form an angle (β) of about 90°.

11. Commissioning device in accordance with one of the claims 8 through 10,
**characterized in that**
said shelf fastening bracket (15) has a tilting drive (17) and a tilt control means (18) for said container (3).

12. Commissioning device in accordance with claim 11,
**characterized in that**
said tilting drive (17) is a preferably pneumatically operated piston-and-cylinder means, which is articulated to said fastening wall (14) eccentrically to said pivot axis (16).

13. Commissioning device in accordance with claim 11 or 12,
**characterized in that**
said tilt control means (18) comprises a control valve that can be actuated electromagnetically.

14. Commissioning device in accordance with one of the claims 11 through 13,
**characterized in that**
said container (3) including said shelf fastening bracket (15), said tilting drive (17) and said tilt control means (18) is an assembly unit or built-in module for said shelf (2).

15. Commissioning device in accordance with one of the claims 11 through 14,
**characterized in that**
said shelf fastening bracket (15), said tilting drive (17) and said tilt control means (18) have a width that is smaller than or equal to said container width (b).

16. Commissioning device in accordance with claim 14 or 15,
**characterized in that**
a stationary shelf wall (8) made in one piece is provided for a plurality of assembly units or built-in modules arranged at closely spaced locations next to one another.

17. Commissioning device in accordance with one of the claims 1 through 16,
**characterized in that**
a plurality of said containers (3) are arranged next to one another and/or one after another in one or more shelf planes located one on top of another.

18. Commissioning device in accordance with one of the claims 1 through 17,
**characterized in that**
said stationary shelf wall (8) is a built-in part of a shelf, which can be built up variably from a frame system (20) according to the modular principle.

## Revendications

1. Dispositif d'approvisionnement (1) avec des stockages intermédiaires ayant la forme de récipients (3) susceptibles d'être basculés avec une ouverture de remplissage (4), disposés dans une étagère (2) essentiellement horizontale par rapport à la direction longitudinale de l'étagère, et avec transporteur de collecte (5) inférieur associé aux récipients (3) susceptibles d'être basculés, un transporteur central ou un tampon en direction longitudinale de l'étagère, un récipient (3) ou plusieurs étant rempli(s) manuellement ou mécaniquement, de préférence en même temps, avec les produits choisis dans une position (F) des récipients pour une commande d'approvisionnement, et les produits choisis de la commande d'approvisionnement sont délivrés en basculant le récipient rempli dans une position de remplissage (K), sur le transporteur de collecte (5), le transporteur central ou le tampon et conduits sur le transporteur de collecte, ou après le tampon à un récipient de récolte qui comprend de préférence tous les produits souhaités de la commande d'approvisionnement,
**caractérisé en ce que** chaque récipient (3) susceptible d'être basculé comprend un côté de récipient (7) ouvert, sauf pour l'ouverture de remplissage (4), qui est maintenu fermé dans la position de remplissage (F) du récipient par une paroi de l'étagère (8) stationnaire, et dans lequel côté de récipient la position de basculement (K) éloignée de la paroi de l'étagère (8) stationnaire est ouverte et forme l'ouverture de livraison du récipient (3), à partir de laquelle les produits du récipient tombent sur le transporteur de récolte (5), le transporteur central ou le tampon.

2. Le dispositif d'approvisionnement selon la revendication 1,
**caractérisé en ce que** la paroi de l'étagère (8) stationnaire est une paroi d'étagère verticale ou une paroi d'étagère pliée vers la verticale qui s'étend en direction longitudinale de l'étagère de préférence sur le côté avant de l'étagère.

3. Le dispositif d'approvisionnement selon la revendication 2,
**caractérisé en ce que** le côté de récipient (7) ouvert se raccorde vers le bas à l'ouverture de remplissage (4) du récipient (3).

4. Le dispositif d'approvisionnement selon la revendication 2 ou 3,
**caractérisé en ce que** le côté de récipient (7) ouvert et l'ouverture de remplissage (4) s'étendent sur toute la largeur du récipient (b) en direction longitudinale de l'étagère.

5. Le dispositif d'approvisionnement selon une des revendications 1 à 4,
**caractérisé en ce que** le récipient (3) possède des parois planes ; un fond du récipient (9) plan, une paroi arrière du récipient (10) plane et deux parois verticales (11, 12) espacées l'une de l'autre étant au moins prévus en tant que parois latérales du récipient en direction transversale de l'étagère, et le côté du récipient (7) ouvert étant disposé en face de la paroi arrière du récipient (10).

6. Le dispositif d'approvisionnement selon la revendication 5,
**caractérisé en ce que** la paroi arrière du récipient (10) présente des ouvertures de perforation (13).

7. Le dispositif d'approvisionnement selon la revendication 5 ou 6,
**caractérisé en ce que** les deux parois verticales (11, 12) sont formées de la même façon.

8. Le dispositif d'approvisionnement selon une des revendications 5 à 7,
**caractérisé en ce que** les deux parois verticales (11, 12) possèdent cinq angles, une autre paroi de fixation (14) plan étant prévue derrière l'ouverture de remplissage (4) sur laquelle on a prévu sur le haut, une console de fixation de l'étagère (15) de préférence verticale qui comporte sur son extrémité inférieur, un axe de pivotement (16) horizontal sur lequel le récipient (3) est fixé de façon suspendue et est susceptible d'être pivoté vers le bas et vers le haut en direction transversale de l'étagère.

9. Le dispositif d'approvisionnement selon une des revendications 1 à 8,
**caractérisé en ce que** le côté du récipient (7) ouvert et l'ouverture de remplissage (4) comprennent un angle (α) de 180° jusqu'à environ 150°.

10. Le dispositif d'approvisionnement selon une des revendications 1 à 9,
**caractérisé en ce que** le côté du récipient (7) ouvert et le fond du récipient (9) comprennent un angle (β) d'environ 90°.

11. Le dispositif d'approvisionnement selon une des revendications 8 à 10,
**caractérisé en ce que** la console de fixation de l'étagère (15) présente un entraînement de basculement (17) et un dispositif de commande du basculement (18) pour le récipient (3).

12. Le dispositif d'approvisionnement selon la revendication 11,
**caractérisé en ce que** l'entraînement de basculement (17) est un dispositif à pistons-cylindres actionné de préférence de façon pneumatique, qui est articulé de façon excentrée par rapport à l'axe de pivotement (16) par rapport à la paroi de fixation (14).

13. Le dispositif d'approvisionnement selon la revendication 11 ou 12,
**caractérisé en ce que** le dispositif de commande de pivotement (18) comprend une soupape de commande actionnée de façon électromagnétique.

14. Le dispositif d'approvisionnement selon une des revendications 11 à 13,
**caractérisé en ce que** le récipient (3) est la console de fixation de l'étagère (15), l'entraînement de basculement (17) et le dispositif de commande de basculement (18) inclus , une unité de construction, respectivement un module de montage pour l'étagère (2).

15. Le dispositif d'approvisionnement selon les revendications 11 à 14,
**caractérisé en ce que** la console de fixation de l'étagère (15), l'entraînement de basculement (17) et le dispositif de commande de basculement (18) possèdent une largeur inférieure ou identique à la largeur du récipient (b).

16. Le dispositif d'approvisionnement selon les revendications 14 ou 15,
**caractérisé en ce qu'**une paroi de l'étagère (8) stationnaire formée en une pièce, est prévue pour plusieurs unités disposées les unes à côté des autres de façon rapprochée.

17. Le dispositif d'approvisionnement selon les revendications 1 à 16,
**caractérisé en ce que** plusieurs récipients (3) sont disposés les uns à côté des autres et / ou les uns derrière les autres sur une ou plusieurs planche(s) d'étagères situées les unes au dessus des autres.

18. Le dispositif d'approvisionnement selon une des revendications 1 à 17,
**caractérisé en ce que** la paroi de l'étagère (8) stationnaire est une partie de construction d'une étagère qui peut être montée de façon variable à partir d'un système de cadre (20) selon le principe modulaire.
